# EUROPEAN PATENT APPLICATION

(11) **EP 1 640 393 A1**
(43) Date of publication of application: **29.03.2006**
(21) Application number: 04745719.7
(22) Date of filing: 09.06.2004
(51) Int. Cl.: C08G 18/00, C08G 101/00

(54) **POLYOL COMPOSITION FOR HARD POLYURETHANE FOAM AND METHOD FOR PRODUCING HARD POLYURETHANE FOAM**

(30) Priority: 20.06.2003 JP 2003176609
(71) Applicant: Toyo Tire & Rubber Co. Ltd., Osaka-shi, Osaka 550-8661 (JP); CENTRAL GLASS COMPANY, LIMITED, Ube-shi, Yamaguchi-ken 755-0001 (JP)
(72) Inventor: ANZAI, Hiroyuki, c/o TOYO TIRE & RUBBER CO., LTD., Osaka-shi Osaka 5508661 (JP); ANRAKU, Natsuko, c/o TOYO TIRE & RUBBER CO., LTD., Osaka-shi, Osaka 5508661 (JP); JINNO, Masahiro, c/o TOYO TIRE & RUBBER CO., LTD., Osaka-shi, Osaka 5508661 (JP); SHIROO, Fumio, c/o TOYO TIRE & RUBBER CO., LTD., Osaka-shi, Osaka 5508661 (JP); HIBINO, Yasuo, c/o Chemical Research Center, Kawagoe-shi, Saitama 3501151 (JP); HESAKA, Toshio, c/o Chemical Research Center, Kawagoe-shi, Saitama 3501151 (JP)
(74) Representative: Hart Davis, Jason
(86) International application number: PCT/JP2004/008044
(87) International publication number: WO 2004/113409

(57) **Abstract**

The present invention provides a polyol composition for hard polyurethane foam in which HFC-245fa is used as a blowing agent and its vapor pressure is suppressed, and a method for producing a hard polyurethane foam. The polyol composition for hard polyurethane foam comprises at least a polyol compound, a blowing agent, a foam stabilizer and a catalyst, which is mixed with an isocyanate component containing a polyisocyanate compound, followed by foaming and curing to form a hard polyurethane foam, and the blowing agent is 1,1,1,3,3-pentafluoropropane (HFC-245fa) and further comprises at least one compatibilizer selected from the group consisting of DMA, NMP, GBL and MPA, and 1,1,1,3,3-pentafluorobutane (HFC-365mfc) in a predetermined ratio.

## Description

### BACKGROUND OF THE INVENTION

### 1. Field of the Invention

The present invention relates to a hard polyurethane foam polyol composition containing, as an essential component, 1, 1, 1, 3, 3-pentafluoropropane (HFC-245fa) which is a blowing agent component, and a method for producing a hard polyurethane foam.

### 2. Description of the Related Art

As a blowing agent of a hard polyurethane foam which is an excellent heat insulating material, 1, 1-dichloro-1-fluoroethane (HCFC-141b) having a small ozone depletion potential is now used. HCFC-141b is a blowing agent having a small ozone depletion potential, but is not zero, and thus it has already been decided that the use of it is abolished wholly before the end of 2003 in view of the protection of global environment.

As a method for producing a hard polyurethane foam, which uses a blowing agent to be replaced by HCFC-141b, for example, a technique of using a low-boiling hydrocarbon such as n-pentane or cyclopentane (JP 3181700) and a technique of using a chlorine-free low-boiling halogenated hydrocarbon compound such as HFC-245fa or HFC-365mfc (JP 2002-201251) are known.

However, the low-boiling hydrocarbon such as n-pentane or cyclopentane is a highly combustible compound. Therefore, a severe fire preventive countermeasure must be required in a process for production of a polyol composition containing these compounds as a blowing agent, a process for production of a hard polyurethane foam using the polyol composition, and a waste disposal process of grinding wastes of the hard polyurethane foam. Also it is necessary to renew facilities in a conventional production facility of a hard polyurethane foam. Also there is a problem such as high cost for facilities including disaster prevention measures. The hard polyurethane foam obtained by using pentanes as a blowing agent is inferior in flame retardancy as compared with a hard polyurethane foam obtained by using conventional HCFC-141b as a blowing agent.

HFC-365mfc is registered as a non-hazardous substance according to the standard of the Japanese Fire Protection Law. However, it is confirmed by DIN standard that its flash point is - 27°C and there is an example that a polyol composition containing HFC-365mfc as a blowing agent is considered to be a substance belonging to the first class petroleum of hazardous substances class 4 under the Fire Protection Law, depending on the composition thereof. Therefore, there is a problem that it is impossible to handle or store it as a hazardous substance, like the polyol composition containing HCFC-141b as a blowing agent. Also there is a problem that HFC-365mfc is inferior in compatibility with a polyol compound as a main component of the polyol composition.

To the contrary, HFC-245fa is a blowing agent which is free from danger of ignition and must not be handled as a hazardous substance, but has a boiling point of 15°C and also has a high vapor pressure at normal temperature. Therefore, when HFC-245fa is used as the blowing agent, there arise problems that vessels containing a polyol composition, such as drum and oilcan expand in the summer season, and that a polyol composition stock solution spouts due to vaporization of the blowing agent upon plug opening, or the blowing agent volatilizes to reduce the content, and thus a hard polyurethane foam having a predetermined density can not be obtained.

Japanese Unexamined Patent Publication No. 2002-201251 discloses a technique of using HFC-245fa and HFC-365mfc in combination as a blowing agent. However, it does not exert the effect of suppressing a vapor pressure and a further improvement is required.

### SUMMARY OF THE INVENTION

An object of the present invention is to provide a polyol composition for hard polyurethane foam in which HFC-245fa is used as a blowing agent and its vapor pressure is suppressed, and a method for producing a hard polyurethane foam.

The present invention is directed to a polyol composition for hard polyurethane foam, comprising at least a polyol compound, a blowing agent, a foam stabilizer and a catalyst, which is mixed with an isocyanate component containing a polyisocyanate compound, followed by foaming and curing to form a hard polyurethane foam, wherein
the blowing agent contains 1, 1, 1, 3, 3-pentafluoropropane (HFC-245fa) as a main component and further comprises at least one compatibilizer selected from the group consisting of N,N-dimethylacetamide (DMA), N-methyl pyrrolidone (NMP), γ-butyrolactone (GBL) and methoxypropyl, acetate (MPA), and 1, 1, 1, 3, 3-pentafluorobutane (HFC-365mfc), and also HFC-245fa/HFC-365mfc ≥ 60/40 (weight ratio) and (HFC-245fa + HFC-365mfc)/(compatibilizer) = 95/5 to 60/40 (weight ratio).

When HFC-245fa is used as the blowing agent and also at least one compatibilizer selected from the group consisting of DMA, NMP, GBL and MPA and, if necessary, HFC-365mfc are added, the vapor pressure of HFC-245fa can be suppressed while maintaining foaming characteristics as well as physical characteristics and heat insulating properties of the resulting hard polyurethane foam.

HFC-365mfc is a compound having a boiling point of 40.2°C and is excellent in compatibility with HFC-245fa, and also serves as a blowing agent and decreases the vapor pressure.

When a weight ratio HFC-245fa/HFC-365mfc is less than 60/40, the content of HFC-365mfc increases, and thus the flash point decreases and the resulting polyol composition may be recognized as petroleums having high combustibility among hazardous substances class 4. HFC-365mfc may not be used.

When a weight ratio (HFC-245fa + HFC-365mfc)/(compatibilizer) is more than 95/5, the content of the compatibilizer excessively decreases and it becomes impossible to sufficiently exert the addition effect. On the other hand, when the weight ratio is less than 60/40, the content of the compatibilizer excessively increases and physical characteristics of the foam may deteriorate. The weight ratio (HFC-245fa + HFC-365mfc)/(compatibilizer) is more preferably from 85/15 to 70/30.

The compatibilizer has excellent compatibility with HFC-245fa, and both of HFC-365mfc and a polyol compound. As a result, compatibility of the blowing agent with the polyol compound is improved by the use of the compatibilizer. With the above composition, there can be exerted excellent effect of improving uniformity of cells of the foam, suppressing so-called cell roughness and improving adhesion with the surface material.

The compatibilizer may be mixed with a component such as polyol compound after previously mixing with HFC-245fa, and HFC-365mfc, which is optionally added, thereby to decrease a vapor pressure of the blowing agent composition itself. Each component may be mixed with a component such as polyol compound to give a polyol composition.

Another aspect of the present invention is directed to a method for producing a hard polyurethane foam, which comprises the step of mixing an isocyanate component with a polyol composition, and foaming and curing the mixture to form a hard polyurethane foam, wherein
the polyol composition contains at least a polyol compound, a blowing agent, a foam stabilizer and a catalyst, and wherein
the blowing agent contains 1, 1, 1, 3, 3-pentafluoropropane (HFC-245fa) as a main component and further comprises at least one compatibilizer selected from the group consisting of N,N-dimethylacetamide (DMA), N-methyl pyrrolidone (NMP), γ-butyrolactone (GBL) and methoxypropyl acetate (MPA), and 1, 1, 1, 3, 3-pentafluorobutane (HFC-365mfc), and also HFC-245fa/HFC-365mfc ≥ 60/40 (weight ratio) and (HFC-245fa + HFC-365mfc)/(compatibilizer) = 95/5 to 60/40 (weight ratio).

According to this method, a hard polyurethane foam in which HFC-245fa is used as a main component of a blowing agent, using the same manufacturing apparatus as in case of using HCFC-141b as a blowing agent without drastically modifying the apparatus so as to perform a severe fire preventive countermeasure.

### BRIEF DESCRIPTION OF THE DRAWING

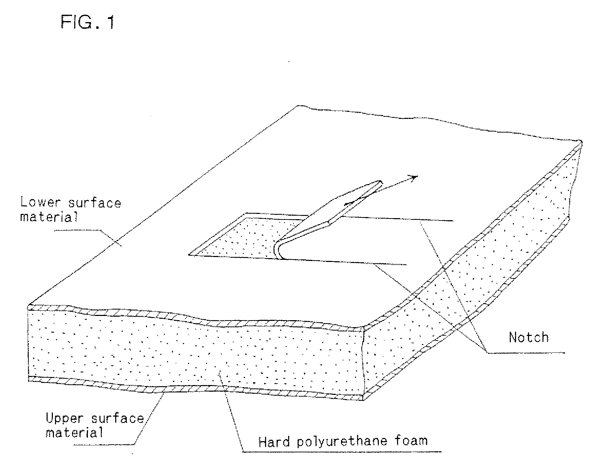

Fig. 1 is a schematic view showing a method of measuring an adhesive strength between a hard polyurethane foam and a surface material.

### DESCRIPTION OF THE PREFERRED EXAMPLES

The polyol composition for hard polyurethane of the present invention contains at least, in addition to a blowing agent, a polyol compound, a foam stabilizer and a catalyst.

As the polyol compound, a known polyol compound for hard polyurethane foam can be used without limitation. Examples of the polyol compound include tertiary amino group-containing polyol compound, aliphatic polyol and aromatic polyol.

The tertiary amino group-containing polyol compound is a polyfunctional polyol compound obtained by ring-opening addition polymerization of one or more kinds selected from among alkylene oxide such as propylene oxide (PO), ethylene oxide (EO) or styrene oxide (SO) and tetrahydrofuran, using a primary or secondary amine as an initiator.

Examples of the primary or secondary amine initiator as the initiator of the tertiary amino group-containing polyol compound include aliphatic primary or secondary monoamines such as ammonia, methylamine and ethylamine; aliphatic primary or secondary polyamines such as ethylenediamine, hexamethylenediamine and N, N'-dimethylethylenediamine; aromatic primary or secondary mono- or polyamines, such as aniline, diphenylamine, toluenediamine, diphenylmethanediamine and N-methylaniline; and alkanolamines such as monoethanolamine and diethanolamine.

The aliphatic polyol is a polyfunctional oligomer obtained by ring-opening addition polymerization of one or more kinds selected from among alkylene oxide such as propylene oxide (PO), ethylene oxide (EO) or styrene oxide (SO) and cyclic ether such as tetrahydrofuran, using an aliphatic or alicyclic polyfunctional active hydrogen compound as a polyol initiator.

Examples of the polyol initiator of the aliphatic polyol include glycols such as ethylene glycol, propylene glycol, 1,4-butanediol, 1,3-butanediol, 1,6-hexanediol and neopentyl glycol; triols such as trimethylolpropane and glycerin; tetrafunctional alcohols such as pentaerythritol; polyhydric alcohols such as sorbitol and sucrose; and water.

Examples of the aromatic polyol include a polyol compound obtained by adding the above alkylene oxide to a polyfunctional active hydrogen compound having an aromatic ring in the molecule, and a polyol compound as an ester of an aromatic polycarboxplic acid and a polyhydric alcohol.

Specific examples of the polyol compound obtained by adding the above alkylene oxide to the polyfunctional active hydrogen compound include a compound obtained by ring-opening addition of hydroquinone or bisphenol A with at least one selected from among PO, EO and SO.

Specific examples of the ester of the aromatic polycarboxylic acid and the polyhydric alcohol include hydroxyl group-terminated esterpolyol of terephthalic acid, phthalic acid or isophthalic acid with ethylene glycol or diethylene glycol.

The polyol compound preferably has a hydroxyl value within a range from 200 to 600 mgKOH/g. When using a tertiary amino group-containing polyol compound or an aliphatic polyol among these polyol compounds, the effect of decreasing viscosity of the polyol composition can be obtained.

As the catalyst used in the polyol composition for hard polyurethane foam of the present invention, a known catalyst for hard polyurethane foam can be used without limitation. Specific examples of the urethanization reaction catalyst include tertiary amines such as triethylenediamine, N-methylmorpholine, N, N, N', N'-tetramethylethylenediamine, N, N, N', N'-tetramethylhexamethylenediamine, N, N-dimethylcyclohexylamine and diazabicycloundecene (DBU); and metallic catalysts such as dibutyltin dilaurate, dibutyltin diacetate and tin octylate.

It is a preferred aspect to improve characteristics of the hard polyurethane foam obtained by adding a small amount of water as a blowing agent.

It is preferred to use a catalyst capable of forming an isocyanurate bond which contributes to an improvement in flame retardancy in the structure of the polyurethane molecule. Examples of the catalyst include potassium acetate and potassium octylate. Among tertiary amine catalysts, some catalyst accelerates the isocyanurate ring formation reaction. The catalyst capable of accelerating the formation of the isocyanurate bond may be used in combination with a catalyst capable of accelerating the formation of a urethane bond.

As the foam stabilizer, a known foam stabilizer for hard polyurethane foam can be used without limitation. As the foam stabilizer, a graft copolymer or a block copolymer of polydimethylsiloxane and of polydimethylsiloxane and polyalkylene oxide can be used. As the polyalkylene oxide, a random copolymer or a block copolymer of polyethylene oxide, polypropylene oxide or ethylene oxide, each having an average molecular weight of 5000 to 8000, and propylene oxide.

In the polyol composition for hard polyurethane foam of the present invention, there can be used flame retardants, coloring materials and antioxidant which are well known to a person with an ordinary skill in the prior art.

Examples of the flame retardant include metal compounds such as halogen-containing compound, organic phosphoric acid esters, antimony trioxide and aluminum hydroxide.

These flame retardants such as organic phosphoric acid ester had such a problem that physical characteristics of the resulting hard polyurethane foam deteriorate when excessively added. The metal compound powder such as antimony trioxide has such a problem that an adverse influence is exerted on foaming behavior of the foam when excessively added. Therefore, the amount of them to be added is limited within a range where these problems do not arise.

The organic phosphoric acid esters also serve as a plasticizer and exert the effect of improving embrittlement of the hard polyurethane foam and are therefore preferable additives. The organic phosphoric acid esters also exert the effect of decreasing viscosity of the polyol composition. As the organic phosphoric acid esters, for example, halogenated alkyl ester of phosphoric acid, alkyl phosphoric acid ester, allyl phosphoric acid ester and phosphonic acid ester can be used. Specific examples thereof include tris (2-chloroethyl) phosphate (CLP, manufactured by Daihachi Chemical Industry Co., Ltd.), tris (β-chloropropyl) phosphate (TMCPP, manufactured by Daihachi Chemical Industry Co., Ltd.), tributoxyethyl phosphate (TBXP, manufactured by Daihachi Chemical Industry Co., Ltd.), tributyl phosphate, triethyl phosphate, cresylphenyl phosphate and dimethylmethyl phosphonate. These organic phosphoric acid esters can be used alone or in combination. The amount of the organic phosphoric acid ester to be added is preferably within a range from 5 to 30 parts by weight based on 100 parts by weight of the entire amount of the polyol compound. When the amount is more than the above range, there arises a problem that sufficient flame retardant or plasticization effect is not exerted and the mechanical strength of the foam decreases.

As the polyisocyanate compound which is mixed and reacted with the polyol composition to form a hard polyurethane foam, for example, a liquid MDI is preferably used. The liquid MDI is used because of ease of handling, high reaction velocity, excellent physical characteristics of the resulting hard polyurethane foam and low cost. As the liquid MDI, crude MDI (c-MDI) (44V-10, 44V-20 (manufactured by Sumitomo Byer Urethane Co., Ltd.)) and uretonimine-containing MDI (Myrionate MTL, manufactured by Nippon Polyurethane Industry Co., Ltd.) are used. It is particularly preferred to use crude MDI among these polyisocyanate compounds because the resulting hard polyurethane foam is excellent in physical characteristics such as mechanical strength and low cost is attained.

Other polyisocyanate compounds may be used in combination with the liquid MDI. As the polyisocyanate compound, a diisocyanate or polyisocyanate compound, which is well known in the technical field of the polyurethane, can be used without limitation.

The polyol composition for hard polyurethane foam of the present invention can be used in the production of continuously produced hard polyurethane foams such as slab stock foam and sandwich panel, injection molded hard polyurethane foam sandwich panel, and spray foam.

### EXAMPLES

Examples, which specifically illustrate the constitution and effect of the present invention, will now be described.

The polyol composition having the same composition, except that the formulation of a blowing agent composition used was changed, was used. Components other than a blowing agent composition, and contents thereof are as follows.

**Table 1**

| Component | Trade name | Supplier | Contents | Parts by weight |
|---|---|---|---|---|
| Polyol | A | Toho Rika Co., Ltd | Phthalic acid-based polyesterpolyol (OH value: 250) | 50.0 |
| | B | Asahi Glass Co., Ltd. | Ethylenediamine-based polyetherpolyol (OH value: 760) | 35.0 |
| | C | Dai-ichi Kogyo Seiyaku Co., Ltd. | Mannich-based polyetherpolyol (OH value: 470) | 15.0 |
| Foam stabilizer | SH-193 SH- 193 | Dow Corning Toray Silicone Toray Silicone Co., Ltd. | Silicone-based Silicone-based surfactant surfactant | 2.0 |
| Flame retardant | TMCPP | Daihachi Chemical Industry Co., Ltd. | Trismonochloropropyl Trismonochloropropyl phosphate | 15.0 |
| Catalyst | PELRON 9540 | TOMOE engineering Co., Ltd. | Potassium octylate | 4.0 |
| | Dabco-33LV | Air Products Japan, Inc. | Triethylenediamine 33% DPG solution | 4.0 |
| Isocyanate | 44V-20 | Sumitomo Byer Urethane Co., Ltd. | Crude diphenylethane diisocyanate (NCO%: 31%) | 189.6 |

The formulation (% by weight of each component based on 100% by weight of a blowing agent composition) and the amount (parts by weight based on 100 parts by weight of the entire polyol compound) of the blowing agent composition based on 100 parts by weight of a polyol compound of the above composition are shown in Tables 2 to 4. The amount of the blowing agent composition to be added was adjusted so as to control the density of the hard polyurethane foam to 25 kg/m³ upon free foaming.

The hard polyurethane foam was produced by a conventional method. That is, components other than an isocyanate component in the formulation in Table 1 and a blowing agent composition were mixed under stirring to prepare a polyol composition. After controlling the temperature to 20°C, the polyol composition and a polyol component controlling to the temperature of 20°C were mixed at an equivalent ratio NCO/OH of 1.70 under stirring, followed by foaming and curing to obtain a hard polyurethane foam.

As the blowing agent composition, compositions prepared by previously mixing according to the formulations shown in Tables 2 to 4 were used.

### <Evaluation>

### (Absolute vapor pressure)

50 g of a polyol composition stock solution prepared at a predetermined mixing ratio was charged in a 100 ml SUS vessel and then freeze-deaerated with liquid nitrogen in a completely closed state. The vessel was allowed to stand in a constant temperature bath at 40°C and a vapor pressure (absolute pressure) P was measured. A reduction % was calculated by the following equation. Po is a vapor pressure when using only 245fa as a blowing agent Reduction (%) = 100(P₀ - P)/P₀

### (Compressive strength)

A cube measuring 50 mm X 50 mm X 50 mm was cut out from a foam formed by free foaming in a vessel, and then a compressive strength was measured according to JIS-A-9511 (plastic foam heat insulating material).

### (Dimensional stability)

A cube measuring 1.00 mm X 100 mm X 100 mm was cut out from a foam formed by free foaming in a vessel, and then a dimensional change was measured after standing in an atmosphere at -30°C for 24 hours.

### (Adhesion)

On a surface material made of a kraft paper, a foam was formed by free foaming. As shown in Fig. 1, a notch having a width of 5 cm was provided on the back of the surface material bonded with the foam, and then the end portion of the notch was peeled off. An adhesive strength was measured by pulling the end portion using a spring balance. The direction of arrow in Fig. 1 is a pulling direction.

### (Foam stability)

A foam formed by free foaming in a vessel was visually observed. Evaluation was conducted in comparison with a conventional foam obtained by using HCFC-141,b as a blowing agent. The evaluation results are rated according to the following criteria.
A: uniform and fine cells, equivalent to HCFC-141b foam
B: cell roughness is observed, inferior to HCFC-141b foam
C: severe cell roughness is observed, poor foaming

### <Evaluation results>

The evaluation results are shown in the lower column of Tables 2 to 4. Blowing agent compositions shown in Table 2 are compositions prepared by previously mixing HFC-245fa with γ-butyrolactone. Blowing agent compositions shown in Table 3 are compositions comprising three components such as HFC-245fa, HFC-365mfc and γ-butyrolactone. Blowing agent compositions shown in Table 4 are compositions prepared by previously mixing HFC-245fa, HFC-365mfc and compatibilizers such as methoxypropyl acetate, N-methyl pyrrolidone and N, N-dimethylacetamide. As is apparent from these results, regarding the blowing agent compositions of the present invention, a vapor pressure of the blowing agent drastically decreased and it became possible to handle like a conventional polyol composition prepared by using HCFC-141b, and also adhesion with the surface material and foam stability were improved. Since dimensional stability of the foam prepared by using HCFC-141b as a blowing agent is -17%, when a ratio (HFC-245fa + HFC-365mfc)/γ-butyrolactone is less than 60/40 (weight ratio) (Comparative Example 1 in which the content of γ-butyrolactone is too large), or a ratio (HFC-245fa + HFC-365anfc)/γ-butyrolactone is 90/10 but a ratio HFC-245fa/HFC-365mfc (weight ratio) is less than 60/40 (Comparative Example 3 in which the content of HFC-365mfc is too large), dimensional stability was lowered as compared with the case of using HCFC-141b as a blowing agent. In Comparative Example 2 in which no compatibilizer is used, satisfactory adhesion was not attained.

**Table 2**

| | | Example 1 | Example 2 | Example 3 | Example 4 | Comparative Example 1 | Comparative Example 2 |
|---|---|---|---|---|---|---|---|
| HFC-245fa | | 90 | 80 | 70 | 60 | 55 | 100 |
| HFC-365mfc | | **-** | **-** | **-** | **-** | **-** | **-** |
| γ-butyrolactone | | 10 | 20 | 30 | 40 | 45 | 0 |
| Amount of blowing agent composition to be added | | 55.6 | 69.3 | 84.3 | 103.4 | 112.7 | 50.0 |
| Absolute vapor pressure {kPa, at 40°C) | | 187 | 177 | 162 | 148 | 160 | 203 |
| Reduction % in vapor pressure | | 8 | 13 | 20 | 27 | 21 | 0 |
| Evaluation results | Compressive strength (kPa) | 162 | 157 | 150 | 145 | 139 | 186 |
| | Dimensional stability (%) | -1.1 | -2.9 | -7.7 | -15.0 | -21.3 | -2.0 |
| | Adhesion (g/5 cm) | 1600 | 1550 | 1550 | 1650 | 1500 | 400 |
| | Foam stability | ○ to ▲ | ○ | ○ | ○ | ○ | X |

**Table 3**

| | | Example 5 | Example 6 | Example 7 | Example 8 | Example 9 | Comparative Example 4 |
|---|---|---|---|---|---|---|---|
| HFC-245fa | | 72 | 48 | 63 | 54 | 64 | 45 |
| HFC-365mfc | | 18 | 12 | 27 | 36 | 16 | 45 |
| γ-butyrolactone | | 10 | 40 | 10 | 10 | 20 | 10 |
| Amount of blowing agent composition to be added | | 55.6 | 104.0 | 60.2 | 60.0 | 67.5 | 61.1 |
| Absolute vapor pressure (kPa, at 40°C) | | 166 | 134 | 154 | 150 | 156 | 148 |
| Reduction % in vapor pressure | | 18 | 34 | 24 | 26 | 23 | 27 |
| Evaluation results | Compressive strength (kPa) | 178 | 146 | 179 | 171 | 166 | 137 |
| | Dimensional stability (%) | -2.0 | -12.3 | -4.8 | -11.3 | -2.3 | -19.6 |
| | Adhesion (g/5 cm) | 1500 | 1600 | 1400 | 1150 | 1750 | 1250 |
| | Foam stability | ○ | ○ | ○ | ○ | ○ | ○to ▲ |

**Table 4**

| | | Example 10 | Example 11 | Example 12 |
|---|---|---|---|---|
| HFC-245fa | | 64 | 64 | 64 |
| HFC-365mfc | | 16 | 16 | 16 |
| Methoxypropyl acetate | | 20 | | |
| N-methyl pyrrolidone | | **-** | 20 | **-** |
| N,N-dimethylacetamide | | **-** | **-** | 20 |
| Amount of blowing agent composition to be added | | 67.5 | 67.5 | 67.5 |
| Absolute vapor pressure (kPa, at 40°C) | | 148 | 154 | 152 |
| Reduction % in vapor pressure | | 27 | 24 | 25 |
| Evaluation results | Compressive strength (kPa) | 142 | 167 | 151 |
| | Dimensional stability (%) | -1.7 | -2.9 | -2.1 |
| | Adhesion (g/5 cm) | 1700 | 1700 | 1700 |
| | Foam stability | ○ | ○ | ○ |

## Claims

1. A polyol composition for hard polyurethane foam, comprising at least a polyol compound, a blowing agent, a foam stabilizer and a catalyst, which is mixed with an isocyanate component containing a polyisocyanate compound, followed by foaming and curing to form a hard polyurethane foam, wherein
the blowing agent contains 1,1,1,3,3-pentafluoropropane (HFC-245fa) as a main component and further comprises at least one compatibilizer selected from the group consisting of N,N-dimethylacetamide (DMA), N-methyl pyrrolidone (NMP), γ-butyrolactone (GBL) and methoxypropyl acetate (MPA), and 1, 1, 1,3,3-pentafluorobutane (HFC-365mfc), and also HFC-245fa/HFC-365mfc ≥ 60/40 (weight ratio) and (HFC-245fa + HFC-365mfc)/(compatibilizer)=95/5 to 60/40 (weight ratio).

2. A method for producing a hard polyurethane foam, which comprises the step of mixing an isocyanate component with a polyol composition, and foaming and curing the mixture to form a hard polyurethane foam, wherein
the polyol composition contains at least a polyol compound, a blowing agent, a foam stabilizer and a catalyst, and wherein
the blowing agent contains 1,1,1,3,3-pentafluoropropane (HFC-245fa) as a main component and further comprises at least one compatibilizer selected from the group consisting of N,N-dimethylacetamide (DMA), N-methyl pyrrolidone (NMP), y-butyrolactone (GBL) and methoxypropyl acetate (MPA), and 1,1,1,3,3-pentafluorobutane (HFC-365mfc), and also HFC-245fa/HFC-365mfc > 60/40 (weight ratio) and (HFC-245fa + HFC-365mfc)/(compatibilizer) = 95/5 to 60/40 (weight ratio).
